# EUROPEAN PATENT APPLICATION

(11) **EP 3 321 793 A1**
(43) Date of publication of application: **16.05.2018**
(21) Application number: 16847957.4
(22) Date of filing: 22.08.2016
(51) Int. Cl.: G06F 3/14

(54) **METHOD AND SYSTEM FOR REAL-TIME SLIDE DISPLAYING OF SCANNED IMAGE**

(30) Priority: 22.09.2015 CN 201510609525
(71) Applicant: Nuctech Company Limited, TongFang Building, Shuangqinglu, Haidian District Beijing 100084 (CN)
(72) Inventor: YUAN, Shaoming, Beijing 100084 (CN); XUAN, Liangliang, Beijing 100084 (CN)
(74) Representative: Cabinet Beau de Loménie
(86) International application number: PCT/CN2016/096193
(87) International publication number: WO 2017/050075

(57) **Abstract**

A method and system for real-time slide displaying of a scanned image. An image conversion supported method for real-time slide displaying of a scanned image, comprising: collecting a scanned image (S410), so as to obtain an incremental image data block; performing incremental data processing (S420), so as to process the incremental image data block according to a state of a current image conversion; adding the incremental image data block to an image cache allocated in a computer memory (S430), the image cache storing image data in a display screen; performing incremental displaying (S440), so as to copy the incremental image data block to a display memory of a display card, and use the display memory of the display card to perform real-time slide displaying on the incremental image data block. When an image conversion request is obtained, an image processing thread is used for processing image data in an image cache so as to obtain image conversion data, and a refresh display request signal is set; and a display refresh thread is used for performing refresh displaying on an image conversion data partition according to the refresh display request signal.

## Description

The present application claims priority to Chinese Patent Application No. 201510609525.X, filed September 22, 2015, the entire contents of which are incorporated herein by reference.

### TECHNICAL FIELD

The present invention relates to a method and a system for displaying a scanned image, and more particularly to a method and a system for slide displaying in real time a scanned image which supports image transformation.

### BACKGROUND

In large container inspection equipment, the current main mode of operation is a control station of the system controlling the scanning process, a data processing station acquiring and storing X-ray image files, and finally an image processing station inspecting an image. In order to improve the efficiency of inspection, sometimes it requires displaying and processing an image in real time, so that the inspector may timely and efficiently perform inspection on the image.

In addition, in the field of X-ray image display, many displaying methods exist, and most of them take use of the processing capability of GPU. Through a powerful GPU processor, algorithm operation may be quickly completed, and then the off-screen memory may be quickly exchanged, to immediately display the processed image. These methods have advantages of not occupying CPU resources, and fast speed for refreshing the screen. However, the disadvantage is relying on expensive graphics processing cards, and different graphics cards differ substantially in functions and are not compatible with each other. This brings about challenges for subsequent maintenance of the device hardware.

Accordingly, there is a demand for a method and a system that allows a user to perform image processing in real time during real-time scanning and real-time displaying, and may not rely on image processing hardware such as a GPU.

The above-mentioned information disclosed in the Background section is merely for the purpose of improving the understanding of the background of the present invention and may therefore include information that does not constitute prior art known to those of ordinary skill in the art.

### SUMMARY

The present invention provides a method and a system for slide displaying a scanned image in real time which supports image transformation, which may achieve an excellent display effect with a low cost.

Other features and advantages of the present invention will become apparent from the following detailed description, or in part, by the practice of the present invention.

According to one aspect of the present invention, there is provided a method for slide displaying a scanned image in real time which supports image transformation, the method being for displaying a scanned image on a display screen through a video card, and the method including: acquiring a scanned image, to obtain an incremental image data block; processing incremental data, to process the incremental image data block according to a current image transformation state; adding the incremental image data block to an image cache allocated in a computer memory, and the image cache for storing image data in a display screen; performing incremental display, to copy the incremental image data block to a display memory of the video card, and slide displaying the incremental image data block in real time through the display memory of the video card. When an image transformation request is acquired, an image processing thread processes the image data in the image cache, to obtain transformed image data, and sets up a refresh and display request signal; and a displaying and refreshing thread refreshes and displays the transformed image data block by block according to the refresh and display request signal.

According to some embodiments, a time period for refreshing each block of data is shorter than a refresh interval of the display screen.

According to some embodiments, the image processing thread and the displaying and refreshing thread are based on a computer CPU as a processing core.

According to some embodiments, the performing incremental display includes: performing incremental copy, to copy the incremental image data block from the computer memory into an off-screen incremental cache allocated in the display memory; performing incremental mapping, to map the incremental image data block in the off-screen incremental cache to a blank area of an off-screen background cache allocated in the display memory; and performing display mapping, to slide map the image data in the off-screen background cache to an off-screen main cache allocated in the display memory, to display the image on the display screen.

According to some embodiments, during the process of performing the incremental copy or the incremental mapping, when it is determined that the blank area cannot accommodate the incremental image data block, the entire image data in the off-screen background cache is shifted to expand the blank area, so as to accommodate the incremental image data block.

According to some embodiments, a moving speed of the slide mapping is related to a frequency of acquisition of the scanned images.

According to some embodiments, a size of the off-screen background cache is equal to the sum of a size of the off-screen incremental cache and a size of the off-screen main cache.

According to some embodiments, processing incremental data further includes: adding the incremental image data block to a queue in the computer memory.

According to some embodiments, performing the incremental copy includes: retrieving the incremental image data block from the queue and copying the incremental image data block to the off-screen incremental cache of the video card.

According to some embodiments, the performing an incremental copy further includes: adding the incremental image data block retrieved from the queue to the image cache in the computer memory.

According to another aspect of the present invention, there is provided a system for slide displaying a scanned image in real time which supports image transformation, the system being for displaying a scanned image on a display screen through a video card, and the system including: a scanned image acquisition module configured to acquire an incremental image data block; an image data management module including: an incremental data processing submodule configured to process the incremental image data block according to a current image transformation state; an image cache maintenance submodule configured to maintain an image cache in the computer memory, the image cache being for storing image data in the display screen; and an image processing thread configured to, when an image transformation request is acquired, process the image data in the image cache, to obtain transformed image data, and set up a refresh and display request signal; and an image data display module including: a display-memory management submodule configured to allocate a display memory, maintain the image data in the display memory and perform slide display mapping on the image; and a displaying and refreshing thread configured to refresh and display the transformed image data block by block according to the refresh and display request signal, wherein the image data management module or the image data display module is further configured to add the incremental image data block to the image cache in the computer memory.

According to some embodiments, a time period for refreshing each block of data is shorter than a refresh interval of the display screen.

According to some embodiments, the image processing thread and the displaying and refreshing thread are based on a computer CPU as a processing core.

According to some embodiments, the display-memory management submodule is configured to: allocate an off-screen incremental cache, an off-screen background cache and an off-screen main cache in the display memory; perform incremental copy, to copy the incremental image data block from the computer memory into an off-screen incremental cache in the display memory; perform incremental mapping, to map the incremental image data block in the off-screen incremental cache to a blank area of an off-screen background cache in the display memory; and perform display mapping, to slide map the image data in the off-screen background cache to an off-screen main cache in the display memory, to display the image on the display screen.

According to some embodiments, the display-memory management submodule is further configured to, during the process of performing the incremental copy or the incremental mapping, when it is determined that the blank area cannot accommodate the incremental image data block, shift the entire image data in the off-screen background cache to expand the blank area, so as to accommodate the incremental image data block.

According to some embodiments, a moving speed of the slide mapping is related to a frequency of acquisition of the scanned images.

According to some embodiments, a size of the off-screen background cache is equal to the sum of a size of the off-screen incremental cache and a size of the off-screen main cache.

According to some embodiments, the incremental data processing submodule is further configured to add the incremental image data block to a queue in the computer memory.

According to some embodiments, performing the incremental copy includes: retrieving the incremental image data block from the queue and copying the incremental image data block to the off-screen incremental cache of the video card.

According to some embodiments, the performing an incremental copy further includes: adding the incremental image data block retrieved from the queue to the image cache in the computer memory.

According to some embodiments, the system is based on an Irrlicht display framework to have an independence from an underlying display platform.

According to the method and the system for slide displaying a scanned image in real time which supports image transformation of some embodiments of the present invention, an excellent display effect may be achieved without substantially relying on the GPU. In addition, according to the system for slide displaying a scanned image in real time which supports image transformation of some embodiments of the present invention, it may have high compatibility and be applicable to a wide range of operation platforms.

### BRIEF DESCRIPTION OF THE DRAWINGS

The above and other features and advantages of the present invention will become more apparent by describing in detail illustrative embodiments thereof with reference to the accompanying drawings.
Fig. 1 schematically shows a method for slide displaying an X-ray image in real time which supports image transformation according to some embodiments of the present invention;
Fig. 2 shows an image mapping process according to some embodiments of the present invention; and
Fig. 3 schematically shows a block diagram of a system for slide displaying an X-ray image in real time which supports image transformation according to some embodiments of the present invention.

### DETAILED DESCRIPTION

An example embodiment will now be described more fully with reference to the accompanying drawings. However, example embodiments may be embodied in many forms and should not be construed as limited to the embodiments set forth herein; rather, those embodiments are provided so that this invention will be thorough and complete, and will fully convey the concepts of example embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, numerous specific details are set forth to give a full understanding of the embodiments of the present invention. However, those skilled in the art will appreciate that the technical solutions of the present invention may be practiced without one or more of the specific details, or other methods, components, materials, devices, steps, and the like may be employed. In other instances, well-known structures, methods, devices, implementations, materials, or operations are not shown or described in detail to avoid obscuring aspects of the present invention.

The block diagram shown in the figures is merely a functional entity and does not necessarily have to correspond to a physically separate entity. That is, these functional entities may be implemented in software form, or implemented in one or more hardware modules or integrated circuits, or implemented in different networks and/or processor devices and/or microcontrollers devices.

The flowchart shown in the drawings is merely illustrative and not necessarily including all of the steps. For example, some steps may also be divided, and some steps may be combined or partially merged, so the actual order may be changed according to the actual situation.

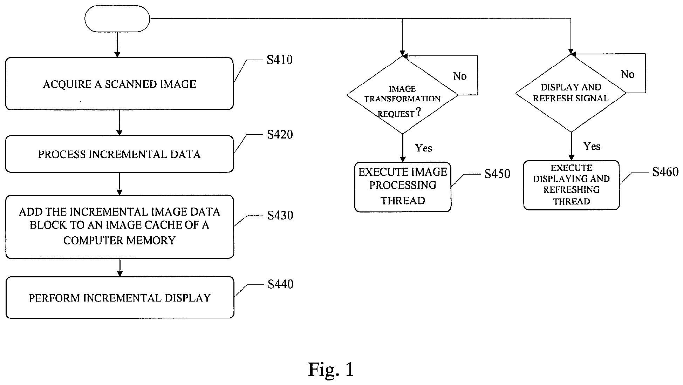

Fig. 1 schematically shows a method for slide displaying an X-ray image in real time which supports image transformation according to some embodiments of the present invention.

According to the concept of the present invention, a multi-thread concurrent processing method and a separate image display refresh thread are utilized, and a necessary display memory is allocated as a buffer for display acceleration.

As shown in Fig. 1, the method according to the present invention includes the following steps.

In step S410, a scanned image is acquired, to obtain an incremental image data block. This may be implemented by for example invoking some interfaces associated to an X-ray scanning device. Although the X-ray scanning device is taken as an example for describing the technical solution of the present invention, those skilled in the art will appreciate that the technical solution of the present invention may also be applied to other radiation and scanning imaging devices or other scanning imaging devices.

In step S420, incremental data is processed, to process the incremental image data block according to a current image transformation state. For example, the image transformation may include enhancement, color inversion, and the like. After the incremental image data block is obtained, it is possible to perform processing such as enhancement and color inversion according to the current image transformation state. However, if image transformation is not necessary, the obtained data block may also not be processed, or may be performed with a null process, which may also be called a kind of incremental data process.

In step S430, the incremental image data block is added to an image cache of a computer memory, and the image cache is for storing image data in the display screen. These data may be used in the image processing.

According to some embodiments, processing incremental data may also include adding the incremental image data block to a queue in the computer memory.

In step S440, incremental display is performed. Specifically, the incremental image data block may be copied into a display memory of a video card, and the incremental image data block may be slide displayed in real time through the display memory of the video card. According to the present invention, since the display memory is directly manipulated, the display speed and display effect may be improved. The slide display may be intuitively understood as movement on image data in the cache with a window, so as to implement gradually displaying the incremental image data in sliding in real time. The basic principle of the slide display is already known and will not be repeated herein. A specific implementation according to the present invention will be described later.

According to some embodiments, the incremental copy includes retrieving the incremental image data block from the queue and copying the incremental image data block to an off-screen incremental cache of the video card, and at the same time, adding the incremental image data block retrieved from the queue to the image cache in the computer memory.

In step S450, when an image transformation request is acquired, an image processing thread processes the image data in the image cache, to obtain transformed image data, and a refresh and display request signal is set up. The image data in the image cache corresponds to the image data in the off-screen background cache.

In step S460, when the refresh and display request signal is detected, a displaying and refreshing thread refreshes and displays the transformed image data block by block.

According to the method of the present invention, the image processing thread and the displaying and refreshing thread are based on a computer CPU as a processing core. By utilizing a multi-threaded mechanism, the incremental displaying process, the image processing and the displaying and refreshing may be carried out independently. In this way, without relying on the GPU, a better display effect may still be obtained. Moreover, since a more inexpensive graphics processor may be used, the cost may be reduced. In addition, since the method of the present invention does not rely on the display hardware, it may avoid relying on a particular hardware, and it may facilitate the later maintenance.

According to the method of the present invention, since the image processing and the displaying and refreshing may be performed by separate threads, the acquiring of the incremental data, the displaying of the incremental image and the transformation processing and displaying of the image on the current screen may not be influenced.

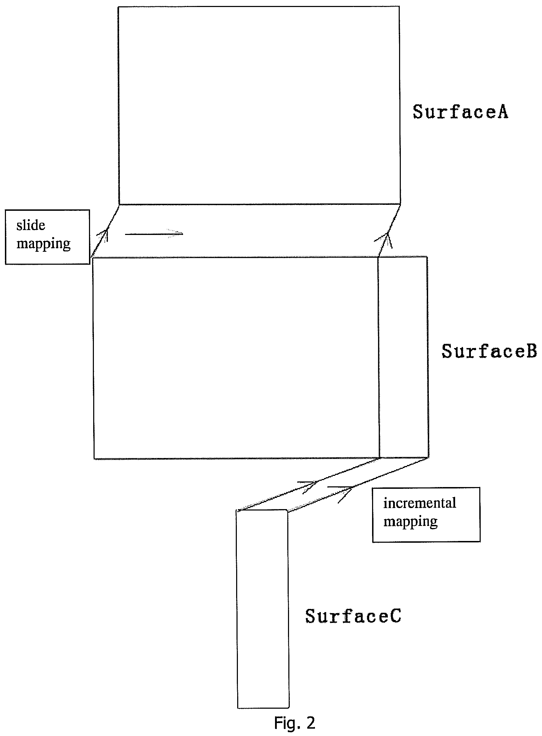

Fig. 2 shows an image mapping process according to some embodiments of the present invention.

Referring to Fig. 2, according to the present invention, the incremental display includes incremental copy, incremental mapping and display mapping.

As shown in Fig. 2, the incremental copy is to copy the incremental image data block from the computer memory into an off-screen incremental cache SurfaceC of the display memory.

Then, the incremental mapping is to map the incremental image data block in the off-screen incremental cache SurfaceC to a blank area of an off-screen background cache SurfaceB of the display memory. The blank area indicates that there is no display memory area for the image data to be displayed.

Next, the display mapping is to map the image data in the off-screen background cache SurfaceB to an off-screen main cache SurfaceA of the display memory, to display the image on the display screen.

The off-screen incremental cache SurfaceC may function as a temporary exchange area with a small size. This may ensure that the data may be quickly copied from the memory to the display memory. When the incremental copy or the incremental mapping is performed, if it is determined that the blank area cannot accommodate the incremental image data block, the entire image data in the off-screen background cache SurfaceB is shifted to expand the blank area, so as to accommodate the incremental image data block. That is, the data in the off-screen background cache SurfaceB is shifted to the left, and the image at the leftmost is shifted out of the display memory. Then, the SurfaceC is incrementally mapped to the blank area of the SurfaceB.

After the incremental image data block in the off-screen incremental cache SurfaceC is mapped to the blank area of the off-screen background cache SurfaceB, the image data in the off-screen background cache SurfaceB may be slide mapped to the off-screen main cache, so as to smoothly display the incremental image. The slide mapping is to move on the off-screen background cache SurfaceB by using a sliding window with the same size of the off-screen main cache SurfaceA, to perform gradual and incremental display of the image. The basic principle of the slide mapping is known to those skilled in the art, which will not be repeated herein.

The moving speed of the slide mapping is related to the frequency of the acquisition of the scanned images. The moving speed may be represented as a sliding step length (a number of columns) for each frame when the slide mapping is performed. For example, the moving speed = the number of columns of the incremental data ÷ (the number of columns of the incremental data ÷ acquisition frequency).

As shown in Fig. 2, the size of the off-screen background cache SurfaceB may be equal to the sum of the size of the off-screen incremental cache SurfaceC and the size of the off-screen main cache SurfaceA.

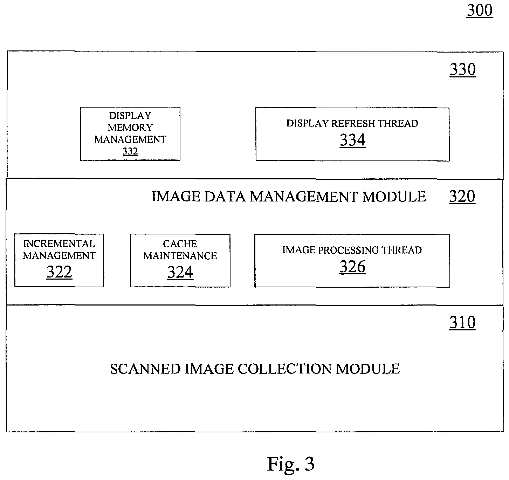

Fig. 3 schematically shows a block diagram of a system for slide displaying an X-ray image in real time which supports image transformation according to some embodiments of the present invention.

As shown in Fig. 3, the system 300 for slide displaying an X-ray image in real time according to the present invention may be configured to display a scanned image on the display screen through the video card. The system 300 may include a scanned image acquisition module 310, an image data management module 320, and an image data display module 330.

The scanned image acquisition module 310 may be configured to acquire an incremental image data block. This may be implemented by for example invoking some interfaces associated to an X-ray scanning device.

The image data management module 320 may include: an incremental data processing submodule 322, configured to process the incremental image data block according to a current image transformation state; an image cache maintenance submodule 324 configured to maintain an image cache in the computer memory, the image cache being for storing image data in the display screen; and an image processing thread 326 configured to, when an image transformation request is acquired, process the image data in the image cache, to obtain transformed image data, and set up a refresh and display request signal.

The image data display module 330 may include: a display-memory management submodule 332 configured to allocate a display memory, maintain the image data in the display memory and perform slide display mapping on the image; and a displaying and refreshing thread 334 configured to refresh and display the transformed image data block by block according to the refresh and display request signal.

In addition, the image data management module 320 or the image data display module 330 may also be configured to add the incremental image data block to the image cache in the computer memory.

The display-memory management submodule 332 may be configured to allocate an off-screen incremental cache SurfaceC, an off-screen background cache SurfaceB and an off-screen main cache SurfaceA in the display memory.

The display-memory management submodule 332 may be configured to perform incremental copy, to copy the incremental image data block from the computer memory into the off-screen incremental cache SurfaceC of the display memory.

The display-memory management submodule 332 may also be configured to perform incremental mapping, to map the incremental image data block in the off-screen incremental cache SurfaceC to a blank area of the off-screen background cache SurfaceB of the display memory.

The display-memory management submodule 332 may also be configured to perform display mapping, to slide map the image data in the off-screen background cache SurfaceB to the off-screen main cache SurfaceA of the display memory, so as to display the image on the display screen.

The display-memory management submodule 332 may also be configured to, during the incremental copy or the incremental mapping, when it is determined that the blank area cannot accommodate the incremental image data block, shift the entire image data in the off-screen background cache SurfaceB to expand the blank area, so as to accommodate the incremental image data block.

According to some embodiments, the incremental data processing submodule 322 may also be configured to add the incremental image data block to a queue of the computer memory. In this way, the incremental copy may include retrieving the incremental image data block from the queue and copying the incremental image data block to the off-screen incremental cache of the video card. In addition, the incremental copy may also include adding the incremental image data block retrieved from the queue to the image cache in the computer memory.

According to some embodiments of the present invention, the system may have independence from the underlying display platform based on the Irrlicht display framework. Irrlicht is an open source high performance real-time 3D engine. Through this framework, the specific display driver layer technology (such as OpenGL, DirectX, etc.) may be blocked. On the basis of this display frame, a desired display control logic may be built. This allows display speedup by utilizing OpenGL or other display technologies such as DirectX. As a result, the compatibility of the display function may be enhanced to accommodate a wider range of operating platforms.

Below an example system for slide displaying an X-ray image in real time which supports image transformation according to some embodiments of the present invention will be described.

The example system may include an image data management object (briefly referred to as ImageObject) and an image data display object (briefly referred to as DisplayObject).

The image data management object (ImageObject) is responsible for caching the X-ray image data in the screen into the computer memory. At the same time, the object is accompanied by a background operation thread configured to respond to an image transformation request triggered by the user. Moreover, in order to implement incremental display of a scanned image in real time, the object also has a cache queue for an incremental image block which is responsible for caching real-time incremental data of a scanned image.

The image data display object (DisplayObject) is responsible for managing the memory of the video card, maintaining the image data in the memory of the video card and performing the image display mapping logic. When a user performs image transformation, the DisplayObject is responsible for performing the image refreshing request after the image is transformed in the ImageObject. In real-time scanning, the DisplayObject is responsible for displaying the incremental image data block in the ImageObject. In order to speed up the display process, a necessary display cache is allocated for the object, including an off-screen main cache SurfaceA, an off-screen incremental cache SurfaceC and an off-screen background cache SurfaceB. This object is also accompanied by an independent displaying and refreshing thread (a non-UI thread), configured to perform a refreshing display task in real time.

The displaying and refreshing logic be implemented as follows.

An incremental display process. In the real-time scanning process, after the system acquires an incremental image data block, by invoking an interface, the incremental data is transferred to a queue of the image data management object (ImageObject). Before being added to the queue, the incremental data may be performed with image processing according to the current image processing state. Then, the incremental data may be appended in the queue. Subsequently, the image data display object (DisplayObject) may quickly detect new incremental image data, then retrieve the incremental data to add the incremental image data to the image cache of the image data management object (ImageObject), and at the same time, copy the incremental image data to the display memory of the off-screen incremental cache SurfaceC (since the display memory is small, the copy speed is rather fast). Next, the incremental data in the off-screen incremental cache SurfaceC is mapped to the blank area of the off-screen background cache SurfaceB. If the off-screen background cache SurfaceB is already full with image data, the data in the off-screen background cache SurfaceB may be shifted, to make room for the mapping of the off-screen incremental cache SurfaceC. Depending on the data acquisition frequency, a proper shift speed may be employed. In this way, the newly added image in the off-screen background cache SurfaceB may be dynamically slided and mapped to the off-screen main cache SurfaceA, i.e., to be displayed on the screen.

An image processing and refreshing process. When the user triggers image transformation, the corresponding image transformation request message may be sent to the image data management object (ImageObject). The background operation thread of the object may perform this image transformation. That is, the image data (including the incremental image data that has not yet to be displayed) in all of the caches of the current image data management object (ImageObject) may be performed with the image processing. After the algorithm is finished, the refresh and display request signal may be set up. The image data display object (DisplayObject) may quickly detect the refresh and display signal, and refresh and display the data block by block, such that the time period for refreshing each block of image data is shorter than the refresh interval of the display (for the refresh rate 60Hz, the refresh interval is 13 ms). In this way, it may ensure that at the same time when the image is being processed, the incremental image may be displayed smoothly in real time.

From the foregoing detailed description, it will be readily understood by those skilled in the art that the system and method according to the embodiments of the present invention may have one or more of the following advantages.

An excellent display effect may be achieved without substantially relying on the GPU. It allows usage of an inexpensive graphic processor and may reduce the cost. It may facilitate the later hardware maintenance, and may avoid replying on a particular hardware. It may sufficiently make use of the multiple core processing capacity and the potential of the CPU.

With the foregoing description of the embodiments, those skilled in the art will readily understand that the embodiments of the present invention may be implemented by hardware or by means of software in combination with the necessary hardware. Thus, the technical solution of the embodiments of the present invention may be embodied in the form of a software product which may be stored in a nonvolatile storage medium (which may be a CD-ROM, a U disk, a mobile hard disk, etc.), including several instructions for causing a computing device (which may be a personal computer, a server, a mobile terminal, or a network device, etc.) to perform the method according to embodiments of the present invention.

It will be understood by those skilled in the art that the drawings are merely schematic diagrams of illustrative embodiments and that the modules or steps in the drawings are not necessary to implement the present invention and are therefore not intended to limit the protection scope of the present invention.

It will be understood by those skilled in the art that the above-described modules may be distributed in the device as described in the embodiments, or may be modified in one or more devices different from the present embodiment. The modules in the above embodiments may be combined into one module or may be further split into a plurality of submodules.

Illustrative embodiments of the present invention have been particularly shown and described above. It is to be understood that the present invention is not limited to the disclosed embodiments, but rather that the present invention is intended to cover various modifications and equivalent arrangements included within the spirit and scope of the appended claims.

## Claims

1. A method for slide displaying a scanned image in real time which supports image transformation, the method being for displaying a scanned image on a display screen through a video card, and the method comprising:
acquiring a scanned image, to obtain an incremental image data block;
processing incremental data, to process the incremental image data block according to a current image transformation state;
adding the incremental image data block to an image cache allocated in a computer memory, and the image cache for storing image data in a display screen;
performing incremental display, to copy the incremental image data block to a display memory of the video card, and slide displaying the incremental image data block in real time through the display memory of the video card,
wherein, when an image transformation request is acquired,
an image processing thread processes the image data in the image cache, to obtain transformed image data, and sets up a refresh and display request signal; and
a displaying and refreshing thread refreshes and displays the transformed image data block by block according to the refresh and display request signal.

2. The method according to claim 1, wherein a time period for refreshing each block of data is shorter than a refresh interval of the display screen.

3. The method according to claim 1, wherein the image processing thread and the displaying and refreshing thread are based on a computer CPU as a processing core.

4. The method according to claim 1, wherein the performing incremental display comprises:
performing incremental copy, to copy the incremental image data block from the computer memory into an off-screen incremental cache allocated in the display memory;
performing incremental mapping, to map the incremental image data block in the off-screen incremental cache to a blank area of an off-screen background cache allocated in the display memory; and
performing display mapping, to slide map the image data in the off-screen background cache to an off-screen main cache allocated in the display memory, to display the image on the display screen.

5. The method according to claim 4, wherein during the process of performing the incremental copy or the incremental mapping, when it is determined that the blank area cannot accommodate the incremental image data block, the entire image data in the off-screen background cache is shifted to expand the blank area, so as to accommodate the incremental image data block.

6. The method according to claim 4, wherein a moving speed of the slide mapping is related to a frequency of acquisition of the scanned images.

7. The method according to claim 4, wherein a size of the off-screen background cache is equal to the sum of a size of the off-screen incremental cache and a size of the off-screen main cache.

8. The method according to claim 1, wherein processing incremental data further comprises: adding the incremental image data block to a queue in the computer memory.

9. The method according to claim 8, wherein performing the incremental copy comprises: retrieving the incremental image data block from the queue and copying the incremental image data block to the off-screen incremental cache of the video card.

10. The method according to claim 9, wherein the performing an incremental copy further comprises: adding the incremental image data block retrieved from the queue to the image cache in the computer memory.

11. A system for slide displaying a scanned image in real time which supports image transformation, the system being for displaying a scanned image on a display screen through a video card, and the system comprising:
a scanned image acquisition module configured to acquire an incremental image data block;
an image data management module comprising:
an incremental data processing submodule configured to process the incremental image data block according to a current image transformation state;
an image cache maintenance submodule configured to maintain an image cache in the computer memory, the image cache being for storing image data in the display screen; and
an image processing thread configured to, when an image transformation request is acquired, process the image data in the image cache, to obtain transformed image data, and set up a refresh and display request signal; and
an image data display module comprising:
a display-memory management submodule configured to allocate a display memory, maintain the image data in the display memory and perform slide display mapping on the image; and
a displaying and refreshing thread configured to refresh and display the transformed image data block by block according to the refresh and display request signal,
wherein the image data management module or the image data display module is further configured to add the incremental image data block to the image cache in the computer memory.

12. The system according to claim 11, wherein a time period for refreshing each block of data is shorter than a refresh interval of the display screen.

13. The system according to claim 11, wherein the image processing thread and the displaying and refreshing thread are based on a computer CPU as a processing core.

14. The system according to claim 11, wherein the display-memory management submodule is configured to:
allocate an off-screen incremental cache, an off-screen background cache and an off-screen main cache in the display memory;
perform incremental copy, to copy the incremental image data block from the computer memory into an off-screen incremental cache in the display memory;
perform incremental mapping, to map the incremental image data block in the off-screen incremental cache to a blank area of an off-screen background cache in the display memory; and
perform display mapping, to slide map the image data in the off-screen background cache to an off-screen main cache in the display memory, to display the image on the display screen.

15. The system according to claim 14, wherein the display-memory management submodule is further configured to, during the process of performing the incremental copy or the incremental mapping, when it is determined that the blank area cannot accommodate the incremental image data block, shift the entire image data in the off-screen background cache to expand the blank area, so as to accommodate the incremental image data block.

16. The system according to claim 14, wherein a moving speed of the slide mapping is related to a frequency of acquisition of the scanned images.

17. The system according to claim 14, wherein a size of the off-screen background cache is equal to the sum of a size of the off-screen incremental cache and a size of the off-screen main cache.

18. The system according to claim 14, wherein the incremental data processing submodule is further configured to add the incremental image data block to a queue in the computer memory.

19. The system according to claim 18, wherein performing the incremental copy comprises: retrieving the incremental image data block from the queue and copying the incremental image data block to the off-screen incremental cache of the video card.

20. The system according to claim 19, wherein the performing an incremental copy further comprises: adding the incremental image data block retrieved from the queue to the image cache in the computer memory.

21. The system according to claim 11, wherein the system is based on an Irrlicht display framework to have an independence from an underlying display platform.
